# EUROPEAN PATENT APPLICATION

(11) **EP 1 666 854 A1**
(43) Date of publication of application: **07.06.2006**
(21) Application number: 04787728.7
(22) Date of filing: 08.09.2004
(51) Int. Cl.: G01H 11/06

(54) **VIBRATION SENSOR**

(30) Priority: 22.09.2003 JP 2003329878
(71) Applicant: HOSIDEN CORPORATION, Yao-shi, Osaka 581-0071 (JP)
(72) Inventor: YASUDA, Mamoru, Kobe-shi, Hyogo 6512225 (JP); SUGIMORI, Yasuo, 5180719 (JP)
(74) Representative: Brommer, Hans Joachim
(86) International application number: PCT/JP2004/013045
(87) International publication number: WO 2005/029012

(57) **Abstract**

In a vibration sensor 1 comprising a diaphragm electrode 3 having weights 7a and 7b attached to opposite surfaces thereof, a first fixed electrode 2a opposed to one surface of the diaphragm electrode 3 and a second fixed electrode 2b opposed to the other surface of the diaphragm electrode 3, the vibration sensor 1 outputs vibration signals based on signals obtained from variations of capacitance between the first fixed electrode 2a and the diaphragm electrode 3 and signals obtained from variations of capacitance between the second fixed electrode 2b and the diaphragm electrode 3.

## Description

### TECHNICAL FILED

The present invention relates to a vibration sensor of the capacitance type for outputting vibration signals based on signals obtained from variations of capacitance between a fixed electrode and a diaphragm electrode opposed thereto.

### BACKGROUND ART

In a vibration sensor of the capacitance type used as a vibration sensor for a pedometer, a micro-vibration galvanometer and a precision device, a vibration sensor for an anti-blur function of a camera and the like, a diaphragm electrode opposed to a fixed electrode comprises a film of polyethylene terephthalate (PET), polyphenylene sulfide (PPS) or the like, and includes a weight mounted on one surface of the film facing away from the fixed electrode to obtain signals of greater amplitude (see Patent Document 1 and Patent Document 2, for example).
Patent Document 1: Patent Application "Kokai" No. 59-79700
Patent Document 2: Patent Application "Kokai" No. 10-9944

### DISCLOSURE OF THE INVENTION

### PROBLEMS TO BE SOLVED BY THE INVENTION

However, the vibration sensors disclosed in Patent Document 1 and Patent Document 2 define a relatively large gap between the weight and a diaphragm electrode ring or between the weight and a circuit board in order to improve the movement of the weight attached to the diaphragm electrode and enhance sensitivity. This leads to a problem that the diaphragm electrode is frequently damaged due to intense movement of the weight caused by an excessive shock when the sensor is dropped or the like.

The present invention has been made having regard to the above-noted problem, and its object is to provide a vibration sensor having excellent shock resistance and capable of obtaining enhanced output signals.

### MEANS FOR SOLVING THE PROBLEM

In order to achieve the above object, a characteristic feature of a vibration sensor according to the present invention lies in comprising a diaphragm electrode having weights attached to opposite surfaces thereof a first fixed electrode opposed to one surface of the diaphragm electrode and a second fixed electrode opposed to the other surface of the diaphragm electrode, wherein the vibration sensor outputs vibration signals based on signals obtained from variations of capacitance between the first fixed electrode and the diaphragm electrode and signals obtained from variations of capacitance between the second fixed electrode and the diaphragm electrode.

With this construction, the fixed electrodes are opposed to the opposite surfaces of the diaphragm electrode thereby to obtain vibration signals based on signals obtained from variations of capacitance between each of the fixed electrodes and the diaphragm electrode. Hence, high output vibration signals can be obtained in response to the same displacement of the diaphragm electrode, compared with the conventional vibration sensor having a fixed electrode opposed to only one surface of the diaphragm electrode. Thus, gaps between the diaphragm electrode and the fixed electrodes are reduced thereby to restrain movement of the weights. Further, the diaphragm electrode is displaceable in a balanced manner in response to vibrations occurring in various directions by virtue of the weights attached to the opposite surfaces thereof, which can effectively avoid breakage or damage of the diaphragm electrode by intense movement of the weights. As a result, it is possible to realize a vibration sensor having excellent shock resistance and capable of obtaining high output signals.

A further characteristic feature of a vibration sensor according to the present invention lies in further comprising a first electret member attached to a surface of the first fixed electrode opposed to the diaphragm electrode, and a second electret member attached to a surface of the second fixed electrode opposed to the diaphragm electrode, the second electret member having different polarization potential to the first electret member.

With this construction, the diaphragm electrode obtains two voltage signals varying in the same direction by the first electret member and the second electret member, respectively, when the diaphragm electrode is displaced. Therefore, it is possible to simplify a circuit construction for processing vibration signals by simply amplifying and outputting the voltage signals obtained at diaphragm electrode, for example.

A still further characteristic feature of a vibration sensor according to the present invention lies in that the diaphragm electrode has slits formed in the same plate member and is divided into a diaphragm portion positioned adjacent the center and having the weights attached thereto, a fixed portion positioned peripherally, and resilient supporting portions for connecting the diaphragm portion to the fixed portion.

With this construction, the resilient supporting portions formed by providing the slits in the diaphragm electrode have a spring construction, as a result of which sufficient amplitude can be obtained to produce greater output. Specifically, high output can be obtained in a balanced manner through a three-point support structure where the diaphragm portion is connected to the fixed portion at three equidistant points. Also, a shock applied from outside is absorbed by the resilient supporting portions with the spring construction, which effectively prevents the diaphragm electrode from being deformed to improve shock resistance.

A still further characteristic feature of a vibration sensor according to the present invention lies in that the diaphragm electrode is formed of one of stainless steel, 42 alloy, Ti-Cu alloy and Be-Cu alloy.

With this construction, a material of great bending strength is used instead of the conventional diaphragm formed on a high polymer such as PET or PPS by metal vapor deposition. Thus, damage of the diaphragm electrode can be effectively avoided against intense vibrations in time of dropping the sensor or the like.

### BEST MODE FOR CARRYING OUT THE PRESENT INVENTION

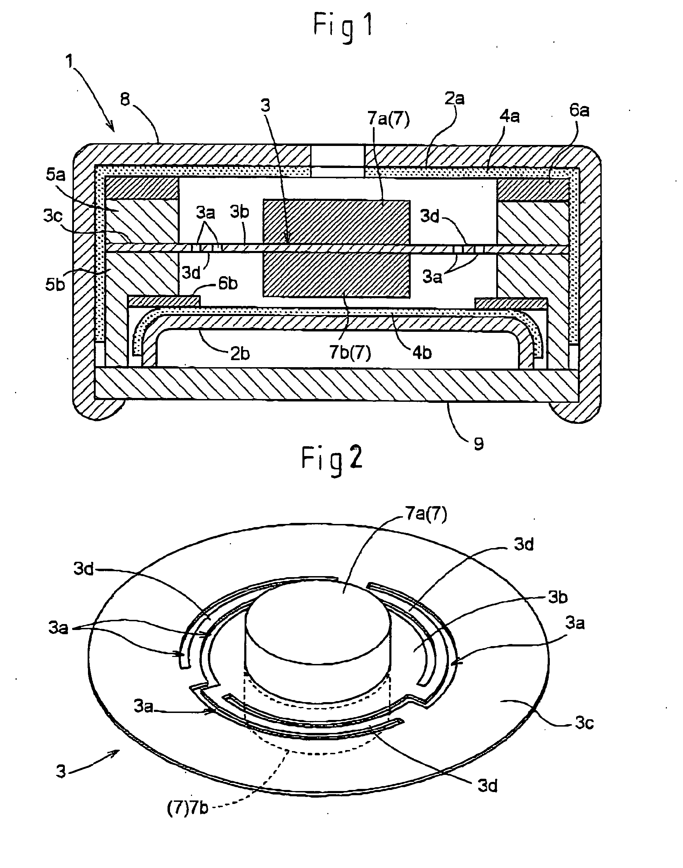

Embodiments of the present invention will be described hereinafter with reference to the accompanying drawings.
A first embodiment will be described in the first place. As illustrated in Fig. 1, a vibration sensor 1 according to the present invention is a push-and-pull type vibration sensor, and comprises a diaphragm electrode 3 having weights 7a and 7b attached to opposite surfaces thereof, a first fixed electrode 2a opposed to one surface of the diaphragm electrode 3, and a second fixed electrode 2b opposed to the other surface of the diaphragm electrode 3. The vibration sensor is adapted to output vibration signals based on signals obtained from variations of capacitance between the first fixed electrode 2a and the diaphragm electrode 3 and signals obtained from variations of capacitance between the second fixed electrode 2b and the diaphragm electrode 3.

Each of the first fixed electrode 2a and the second fixed electrode 2b opposed to the diaphragm electrode 3 has an electret member associated therewith. These electret members may have different polarization potentials or the same polarization potential. Specifically, where they have different polarization potentials, the diaphragm electrode 3 is capable of obtaining voltage signals varying in the same direction corresponding to the same displacement of the diaphragm electrode 3. Thus, any special arithmetic circuit is not required for obtaining vibration signals, which can simplify a circuit construction.

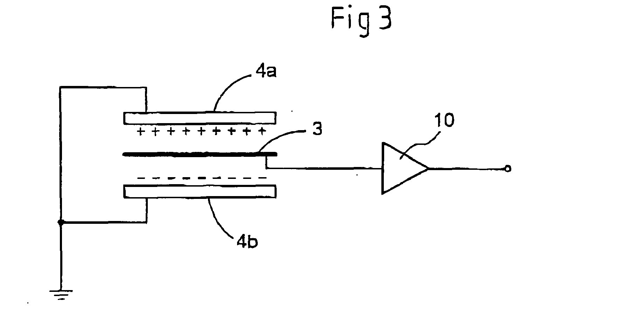

In the present embodiment, the first fixed electrode 2a includes a first electret member 4a mounted on a surface thereof opposed to the diaphragm electrode 3 while the second fixed electrode 2b includes a second electret member 4b mounted on a surface thereof opposed to the diaphragm electrode 3 and having a polarization potential different to the first electret member 4a. More particularly, as shown in Fig. 3, the first electret member 4a is provided with a plus potential while the second electret member 4b is provided with a minus potential such that these electret members may have different polarization potentials. Further, an operational amplifier is provided at an output side acting as an amplifier circuit 10 for amplifying voltage signals received at the diaphragm electrode 3.

When the diaphragm electrode 3 is displaced, the diaphragm electrode 3 obtains voltage signals varying in the same direction corresponding to the same displacement of the diaphragm electrode 3 by the function of the first electret member 4a and the second electret member 4b, thereby to obtain greater output than (twice) the conventional vibration sensor. Specifically, when the diaphragm electrode 3 is displaced toward the first electret member 4a, for example, plus voltage signals are obtained from variations of the capacitance between the first electret member 4a and the diaphragm electrode 3. Similarly, plus voltage signals are also obtained from variations of the capacitance between the second electret member 4b and the diaphragm electrode 3. Thus, the diaphragm electrode 3 can obtain vibration signals corresponding to a sum of the voltage signals obtained by the first electret member 4a and the second electret member 4b.

In this embodiment, the first electret member 4a is provided with plus potential while the second electret member 4b is provided with minus potential. Instead, the first electret member 4a may be provided with minus potential while the second electret member 4b may be provided with plus potential.

Where the first electret member 4a and the second electret member 4b have the same polarization potential, it is possible to provide an inverting circuit for one of the voltage signals or a differential circuit for the respective voltage signals, and a synchronous circuit, an adder circuit and the like, in order to obtain vibration signals corresponding to a sum of respective voltage signals, thereby to obtain vibration signals in the same way as where the first electret member 4a and the second electret member 4b have different polarization potentials.

The vibration sensor 1 of the present invention has the first fixed electrode 2a provided by a bottom portion of a case member 8 having a U-shaped section with the first electret member 4a formed on an inner surface thereof. Successively stacked on the bottom portion of the case member 8 are a ring-shaped spacer 6a, an electrode ring 5a, the diaphragm electrode 3 and an electrode ring 5b, a spacer 6b, the second electret member 4b and the second fixed electrode 2b. The case member 8 is covered with and secured to a circuit board 9 for processing signals, thereby completing assembling of the vibration sensor 1.

The first fixed electrode 2a is connected to the circuit board 9 through the case member 8 while the diaphragm electrode 3 is connected to the circuit board 9 through the electrode ring 5a and the electrode ring 5b.
In this embodiment, the second fixed electrode 2b is formed in unison with a connecting member for connecting the second fixed electrode 2b to the circuit board 9 provided on the back side of the second fixed electrode for processing the signals.

The diaphragm electrode 3 is made of stainless steel, for example. As illustrated in Fig. 2, the diaphragm electrode 3 has slits 3a formed in the same plate member and is divided into a diaphragm portion 3b positioned adjacent the center and having the weights 7a and 7b attached thereto, a fixed portion 3c positioned peripherally and resilient supporting portions 3d for connecting the diaphragm portion 3b to the fixed portion 3c. The diaphragm electrode can be readily manufactured by press working, etching or the like.

In this embodiment, each of the resilient supporting portions 3d is formed as an arcuate strip member with one end continuous with the diaphragm portion 3b and the other end continuous with the fixed portion 3c to have a spring structure. Three resilient supporting portions 3d of the same shape are arranged at equal intervals circumferentially of the diaphragm portion 3b to assume a three-point support structure, which increases displacement of the diaphragm portion 3b to increase the sensor output.

The weights 7a and 7b are formed of stainless steel, for example, and are connected to corresponding positions on opposite surfaces of the diaphragm electrode 3 (spot connection) by an electroconductive adhesive or by welding. This assembly including both the weights 7a and 7b formed in unison with the diaphragm electrode 3 has the center of gravity positioned on a membrane surface constituting the diaphragm electrode 3. Hence, even when the weights 7a and 7b are vibrated in various directions such as circumferential directions, oblique directions or the like of the diaphragm electrode 3, the diaphragm electrode 3 is not twisted or deformed outwardly of its plane. Further, the diaphragm electrode is displaceable in a balanced manner, variations of the capacitance can be accurately recognized, and the diaphragm electrode 3 is effectively prevented from being damaged or otherwise impaired by intense movement of the weights 7a and 7b.

Where the weights 7a and 7b are fixed with an electroconductive adhesive, outer surfaces of both the weights 7a and 7b can be used as the diaphragm electrode 3. Thus, it is possible to reduce a distance between the diaphragm electrode 3 and each of the fixed electrodes. This facilitates selection of a distance between the diaphragm electrode 3 and each of the fixed electrodes.

Further, in this embodiment, the weight 7a has the same height as the electrode ring 5a. Thus, the spacer 6a is provided between the electrode ring 5a and the first electret member 4a in order to maintain a gap between the weight 7a and the first electret member 4a. Similarly, the weight 7b has the same height as the electrode ring 5b adjacent a central portion thereof, and the spacer 6b is provided between the central portion of the electrode ring 5b and the second electret member 4b in order to maintain a gap between the weight 7b and the second electret member 4b. The spacers 6a and 6b are 20µm to 30µm in height.

In this embodiment, the diaphragm electrode 3 is formed of stainless steel. Instead, either one of 42 alloy, Ti-Cu alloy and Be-Cu alloy may be employed, taking fatigue resistance into consideration. Also, the weight 7a and 7b may be formed of tungsten, gold or the like to obtain a greater amplitude.

### INDUSTRIAL UTILITY

The present invention is useful for a vibration sensor for a pedometer, a micro-vibration galvanometer and a precision device, a vibration sensor for an anti-blur function of a camera and the like.

### BRIEF DESCRIPTION OF THE DRAWINGS

[Fig. 1] Sectional view showing an embodiment of a vibration sensor according to the present invention.
[Fig. 2] Schematic view showing an example of diaphragm electrode of the vibration sensor according to the present invention.
[Fig. 3] Wiring diagram showing the vibration sensor and a peripheral circuit thereof.

### DESCRIPTION OF REFERENCE NUMERALS

- 1: vibration sensor
- 2: fixed electrodes
- 3: diaphragm electrode
- 4: electret members
- 5: electrode ring
- 6: spacers
- 7: weights
- 8: case member
- 9: circuit board
- 10: amplifier circuit

## Claims

1. A vibration sensor comprising a diaphragm electrode having weights attached to opposite surfaces thereof, a first fixed electrode opposed to one surface of the diaphragm electrode and a second fixed electrode opposed to the other surface of the diaphragm electrode,
wherein the vibration sensor outputs vibration signals based on signals obtained from variations of capacitance between the first fixed electrode and the diaphragm electrode and signals obtained from variations of capacitance between the second fixed electrode and the diaphragm electrode.

2. A vibration sensor as defined in Claim 1 further comprising a first electret member attached to a surface of the first fixed electrode opposed to the diaphragm electrode, and a second electret member attached to a surface of the second fixed electrode opposed to the diaphragm electrode, the second electret member having a different polarization potential to the first electret member.

3. A vibration sensor as defined in Claim 1 wherein the diaphragm electrode has slits formed in the same plate member and is divided into a diaphragm portion positioned adjacent the center and having the weights attached thereto, a fixed portion positioned peripherally, and resilient supporting portions for connecting the diaphragm portion to the fixed portion.

4. A vibration sensor as defined in Claim 1 wherein the diaphragm electrode is formed of one of stainless steel, 42 alloy, Ti-Cu alloy and Be-Cu alloy.
